# EUROPÄISCHE PATENTSCHRIFT

(11) **EP 3 716 470 B1**
(45) Veröffentlichungstag und Bekanntmachung des Hinweises auf die Patenterteilung: **25.10.2023**
(21) Anmeldenummer: 20166160.0
(22) Anmeldetag: 27.03.2020
(51) Int. Cl.: H02P 29/20, H04W 84/22

(54) **SYSTEM MIT EINER MEHRZAHL VON GETRIEBEMOTOREN UND WENIGSTENS EINEM SENSOR**
SYSTEM COMPRISING A PLURALITY OF GEAR MOTORS AND AT LEAST ONE SENSOR
SYSTÈME DOTÉ D'UNE PLURALITÉ DE MOTEURS AVEC TRANSMISSION ET D'AU MOINS UN CAPTEUR

(30) Priorität: 27.03.2019 DE 102019107897
(43) Veröffentlichungstag der Anmeldung: 30.09.2020
(73) Patentinhaber: Lock Antriebstechnik GmbH, 88521 Ertingen (DE)
(72) Erfinder: Niederer, Patrick, 88499 Riedlingen-Zwiefaltendorf (DE); Lock, Frank, 88521 Ertingen (DE)
(74) Vertreter: Otten, Roth, Dobler & Partner mbB Patentanwälte

(56) Entgegenhaltungen:
- CN-A- 107 715 213
- CN-B- 103 165 005
- CN-U- 202 735 830
- CN-U- 204 827 016
- ZANUSO GIOVANNI ET AL: "Networked Electric Drives in the Industry 4.0", 2018 21ST INTERNATIONAL CONFERENCE ON ELECTRICAL MACHINES AND SYSTEMS (ICEMS), KIEE EMECS (KIEE ELECTRICAL MACHINERY AND ENERGY CONVERSION SYSTEMS), 7. Oktober 2018 (2018-10-07), Seiten 724-729, XP033451655, DOI: 10.23919/ICEMS.2018.8549205 [gefunden am 2018-11-27]
- Der Masterbetrieb-Kommandos ET AL: "SIMATIC NET AS -Interface -Einf?hrung und Grundlagen", , 28. April 2006 (2006-04-28), XP055401273, Gefunden im Internet: URL:http://www.schuelerunterlagen.de/beruf sschule/klasse_12/steuerungstechnik/AS-Int erface (Einf?hrung und Grundlagen).pdf [gefunden am 2017-08-25]
- KUK-SE KIM ET AL: "ZigBee and The UPnP Expansion for Home Network Electrical Appliance Control on the Internet", TOWARD NETWORK INNOVATION BEYOND EVOLUTION : THE 9TH INTERNATIONAL CONFERENCE ON ADVANCED COMMUNICATION TECHNOLOGY ; ICACT 2007 ; PHOENIX PARK, KOREA, FEB. 12 - 14, 2007 ; PROCEEDINGS, IEEE TECHNICAL ACTIVITIES, PISCATAWAY, NJ, USA, 1. Februar 2007 (2007-02-01), Seiten 1857-1860, XP031085112, ISBN: 978-89-5519-131-8

## Beschreibung

### Stand der Technik

Getriebemotoren bestehend aus einem Elektromotor und einem Getriebe sind bekannt.

Ein bekannter Elektromotor umfasst eine Sensoreinheit, welche dazu ausgebildet ist, eine Bewegung einer Antriebswelle des Elektromotors und/oder einer Antriebswelle des Getriebes zu detektieren. Hierdurch lässt sich auf eine Bewegungslänge eines durch den Getriebemotor angetriebenen Gegenstands rückschließen. Weiter sind Getriebemotoren bekannt, welche einen Temperatursensor umfassen, um bei einer Überhitzung des Elektromotors den Getriebemotor abzuschalten.

Bekannte Getriebemotoren werden als Antriebselemente eines Antriebssystems verwendet, um beispielsweise in einer Stallung Lüftungselemente zu bewegen. Ein Netzwerk von Antriebssystemen wird beispielsweise in Zanuso et al.: "Networked Electric Drives in the Industry 4.0", DOI:10.23919/ICEMS.2018.8549205 beschrieben.

Nachteilig an solchen bekannten Antriebssystemen ist, dass die Getriebemotoren solcher Antriebssysteme entweder manuell bedient werden oder eine übergeordnete Steuereinheit einzusetzen ist, wodurch eine Implementierung eines solchen Antriebssystems vergleichsweise aufwändig ist und eine automatische Funktion des Antriebssystems von einer Kommunikation mit der Steuereinheit abhängig ist.

### Aufgabe und Vorteile der Erfindung

Der Erfindung liegt die Aufgabe zugrunde, ein verbessertes System umfassend eine Mehrzahl von Getriebemotoren und wenigstens einem Sensor bereitzustellen, insbesondere ein automatisiertes System bereitzustellen, mittels welchem eine vergleichsweise einfache Installation und/oder Betrieb des Systems ermöglicht ist.

Diese Aufgabe wird durch die Merkmale des Anspruchs 1 gelöst.

In den abhängigen Ansprüchen sind vorteilhafte und zweckmäßige Weiterbildungen der Erfindung angegeben.

Der Kern der Erfindung ist ein System mit einer Mehrzahl von Getriebemotoren und wenigstens einem Sensor, wobei der Sensor dazu ausgelegt ist, einen Messwert zu erfassen, wobei jeder Getriebemotor des Systems jeweils eine Elektronikeinheit umfasst, wobei die Elektronikeinheiten der Getriebemotoren so aufgebaut sind, dass ein Datenaustausch zwischen den Elektronikeinheiten der Getriebemotoren ermöglicht ist, wobei wenigstens ein Getriebemotor mit dem Sensor des Systems verbunden ist, wobei die Getriebemotoren derart ausgebildet sind, dass der vom Sensor erfasste Messwert allen Elektronikeinheiten der Getriebemotoren zur Verfügung steht, wobei jede einzelne Elektronikeinheit dazu ausgelegt ist, auf Grundlage des durch den Sensor erfassten Messwerts eine Steuerung und/oder Regelung eines Getriebemotors des Systems vorzunehmen. Hierdurch ist vergleichsweise einfach ein automatisiertes Antriebssystem realisiert.

Der Getriebemotor umfasst beispielsweise einen Elektromotor und ein Getriebe, wobei der Elektromotor mit dem Getriebe gekoppelt ist.

Unter einem Datenaustausch zwischen den Elektronikeinheiten der Getriebemotoren ist vorteilhafterweise ein Informationsaustausch zu verstehen. Eine Information umfasst vorteilhafterweise mehrere elektronische Signale. Die Information liegt beispielsweise in Form eines Datenpakets vor. Daten des Datenpakets umfassen beispielsweise mehrere Bits. Der Datenaustausch findet vorteilhafterweise mittels eines Datenaustauschmittels statt. Das Datenaustauschmittel kann in Form eines Kabels und damit in Form einer Kabelverbindung und/oder einer Funkverbindung vorliegen. Die Funkverbindung ist beispielsweise als eine Bluetooth-Verbindung, eine WLAN-Verbindung und/oder eine Zigbee-Verbindung ausgebildet. Bevorzugterweise baute die Funkverbindung und/oder die Kabelverbindung insbesondere auf dem Standard IEEE 802.15.4 auf.

Vorteilhafterweise ist eine Elektronikeinheit dazu ausgebildet, eine Daten-Auswertung eines vom Sensor erfassten Messwerts, insbesondere aller vom Sensor erfassten Messwerte vorzunehmen.

Bevorzugterweise ist jede Elektronikeinheit eines Getriebemotors dazu ausgelegt, auf Grundlage des durch den Sensor erfassten Messwerts eine Steuerung und/oder Regelung des Getriebemotors, eine Steuerung und/oder Regelung eines weiteren Getriebemotors und/oder eine Steuerung und/oder Regelung mehrere weiterer Getriebemotoren des Systems vorzunehmen.

Beispielsweise umfasst die Elektronikeinheit eine Recheneinheit oder ist als eine Recheneinheit ausgebildet. Die Recheneinheit der Elektronikeinheit ist beispielsweise in Form einer elektronischen Datenverarbeitungsanlage ausgebildet. Von Vorteil ist auch, dass die Elektronikeinheit ein Speicherelement aufweist, auf welchem Messwerte und/oder Prognosen in Form von Daten ablegbar, z.B. speicherbar sind. Vorteilhafterweise sind die Messwerte und/oder Prognosen vom Speicherelement abrufbar, z.B. lesbar vorhanden. Das Speicherelement ist beispielsweise als ein elektronisches und/oder magnetisches Speicherbauteil, z.B. als ein elektronischer und/oder magnetischer Datenträger ausgebildet.

Vorteilhafterweise umfasst das System insbesondere genau zwei Getriebemotoren, insbesondere genau drei Getriebemotoren, insbesondere genau vier Getriebemotoren, insbesondere genau fünf Getriebemotoren, insbesondere genau sechs Getriebemotoren, insbesondere genau sieben Getriebemotoren, insbesondere genau acht Getriebemotoren, insbesondere genau neun Getriebemotoren oder insbesondere genau zehn Getriebemotoren.

Das System umfasst beispielsweise zwischen 2 und 60 Getriebemotoren, z.B. zwischen 2 und 40 Getriebemotoren oder z.B. zwischen 2 und 20 Getriebemotoren. Beispielsweise umfasst das System mehr als 2 Getriebemotoren, z.B. mehr als 5 Getriebemotoren, z.B. mehr als 8 Getriebemotoren oder z.B. mehr als 10 Getriebemotoren.

Weiter wird vorgeschlagen, dass ein Getriebemotor des Systems den Sensor umfasst. Beispielsweise umfasst eine Elektronikeinheit eines Getriebemotors des Systems den Sensor. Der Sensor ist beispielsweise als ein Temperatursensor ausgebildet.

Auch ist es von Vorteil, dass der Sensor zusätzlich zu den Getriebemotoren des Systems vorhanden ist. Der Sensor des Systems ist beispielsweise im angeordneten Zustand des Systems räumlich beabstandet zu den Getriebemotoren vorhanden. Hierdurch ist eine Intelligenz des Systems vergleichsweise einfach erweiterbar.

Der Sensor ist beispielsweise als ein Feuchtigkeits-, Temperatur-, und/oder Luftbestandteilsmessinstrument ausgebildet. Beispielsweise ist der Sensor als ein CO2-Messinstrument ausgebildet. Denkbar ist auch, dass der Sensor als ein Sensorsystem vorhanden ist, umfassend mehrere insbesondere verschiedene Messinstrumente. Beispielsweise sind mit dem Sensor oder dem Messinstrument Wetterdaten ermittelbar. Beispielsweise erfasst der Sensor externe Messdaten, z.B. Wetterdaten. Denkbar ist, dass der Sensor beispielsweise über ein Datennetz mit einer externen Informationseinheit und/oder einer externen Messeinheit verbindbar ist. Vorstellbar ist weiterhin, dass der Sensor dazu ausgebildet ist, eine Information, z.B. einen Messwert und/oder eine Prognose von der externen Informationseinheit und/oder der externen Messeinheit zu empfangen und/oder abzufragen. Eine externe Messeinheit ist beispielsweise als ein Windgeschwindigkeitsmesser und/oder als ein Zeitmesser ausgebildet.

Vorteilhafterweise ist der Sensor derart ausgebildet, dass der Sensor den erfassten Messwert und/oder die erfasste Prognose einer Elektronikeinheit eines Getriebemotors bereitstellt. Beispielsweise ist die Elektronikeinheit des Getriebemotors dazu ausgebildet, den Messwert und/oder die Prognose des Sensors vom Sensor abzufragen oder den Messwert und/oder die Prognose vom Sensor zu empfangen.

In einer vorteilhaften Modifikation des Systems ist ein Getriebemotor des Systems, insbesondere die Elektronikeinheit des Getriebemotors, dazu ausgebildet, einen Aktor zu schalten. Der Aktor ist beispielsweise ein Bestandteil des Systems. Beispielsweise ist der Aktor als ein Schalter, z.B. als ein Lichtschalter und/oder als ein Schalter für ein Lüftungssystem, z.B. für einen Ventilator ausgebildet. Zum Beispiel ist der Aktor als ein Schalter vorhanden, welcher mittels zweier elektrisch leitfähiger Materialien oder eines Halbleiterbauelements eine elektrisch leitende Verbindung, insbesondere zwischen den zwei Materialien, herstellt oder trennt. Denkbar ist auch, dass der Aktor als ein Elektromotor, als ein Leuchtmittel und/oder eine Lampe, als ein Ventilator, als eine Heizung und/oder als ein Lautsprecher vorhanden ist. Bevorzugterweise umfasst das System einen Sensor und/oder einen Aktor, welcher im angeordneten Zustand beabstandet von den Getriebemotoren angeordnet ist. Beispielsweise umfasst das System mehrere Sensoren und/oder mehrere Aktoren, welche im angeordneten Zustand beabstandet von den Getriebemotoren angeordnet sind.

Außerdem ist es von Vorteil, dass der Sensor dazu ausgebildet ist, einen Betriebsparameter eines Getriebemotors des Systems zu erfassen. Vorteilhafterweise erfasst der Sensor einen Betriebsparameter des Getriebes des Getriebemotors und/oder einen Betriebsparameter des Elektromotors des Getriebemotors. Zum Beispiel erfasst der Sensor ein Drehmoment, eine Drehzahl und/oder eine Temperatur des Getriebemotors. Bevorzugterweise erfasst der Sensor einen Betriebsparameter einer Welle des Getriebes des Getriebemotors, insbesondere einer Antriebswelle des Getriebes, mittels welcher durch den Getriebemotor eine externe Einheit antreibbar ist. Die externe Einheit ist z.B. als eine mit dem Getriebemotor koppelbare Welle vorhanden.

Außerdem wird vorgeschlagen, dass auf Grundlage einer Auswertung der vom Sensor erfassten Messwerte, insbesondere durch eine Elektronikeinheit, ein erster Getriebemotor einen weiteren Getriebemotor des Systems steuert und/oder regelt. Hierdurch ist eine insbesondere automatisierte Überwachung der Getriebemotoren des Systems und/oder eine insbesondere automatisierte Steuerung der Getriebemotoren des Systems realisierbar.

Denkbar ist, dass mittels des Temperatursensors eine Betriebstemperatur des Getriebemotors, insbesondere eines Elektromotors des Getriebemotors ermittelbar ist. Vorteilhafterweise ist die Elektronikeinheit dazu ausgebildet, auf Basis der ermittelten Betriebstemperatur, insbesondere der ermittelten Betriebstemperaturen, den Getriebemotor und/oder einen weiteren Getriebemotor des Systems und/oder alle Getriebemotoren des Systems zu steuern und/oder zu regeln. Bei einer Überhitzung eines Getriebemotors des Systems ist diese Überhitzung beispielsweise aufgrund der Messwerte des Sensors durch die Elektronikeinheit ermittelbar. Beispielsweise steuert und/oder regelt die Elektronikeinheit bei Feststellung einer Überhitzung eines Getriebemotors, den überhitzten Getriebemotor, z.B. schaltet und/oder regelt die Elektronikeinheit den Getriebemotor auf einer Antriebsseite des Getriebemotors in den Leerlauf. Zum Beispiel ist die Elektronikeinheit und/oder eine weitere Elektronikeinheit außerdem dazu ausgebildet, einen und/oder mehrere weitere Getriebemotoren zu steuern und/oder zu regeln, sodass diese weiteren Getriebemotoren beispielsweise die Arbeitslast des wegen Überhitzung oder anderweitig ausgefallenen Getriebemotors übernehmen und/oder diese weiteren Getriebemotoren in einen Sicherheitsbetrieb gehen.

Ebenfalls erweist es sich von Vorteil, dass mehrere Sensoren vorhanden sind, wobei jeweils ein Getriebemotor auf Basis eines von einem der Sensoren ermittelten Messwerts einen weiteren Getriebemotor des Systems und/oder einen Aktor des Systems steuert und/oder regelt. Beispielsweise steuert und/oder regelt jeweils ein Getriebemotor des Systems auf Basis mehrerer von einem Sensor ermittelter Messwerte oder mehrerer von mehreren Sensoren ermittelter Messwerte einen weiteren Getriebemotor des Systems und/oder einen Aktor des Systems. Vorteilhafterweise regelt und/oder steuert jeweils nur ein insbesondere einziger Getriebemotor auf Basis eines vom einem Sensor ermittelten Messwerts zumindest einen weiteren Getriebemotor des Systems, insbesondere mehrere Getriebemotoren des Systems.

Weiter wird vorgeschlagen, dass zumindest ein Getriebemotor des Systems dazu ausgelegt ist, den vom Sensor ermittelten Messwert einer Recheneinheit bereitzustellen. Hierdurch ist eine insbesondere automatisierte Überwachung des Systems realisierbar.

Vorteilhafterweise ist die Elektronikeinheit des Getriebemotors dazu ausgelegt, den vom Sensor ermittelten Messwert einer Recheneinheit bereitzustellen. Die Recheneinheit ist beispielsweise Teil des Systems. Vorteilhafterweise ist die Recheneinheit als ein Computer, als ein Smartphone, als ein Handy und/oder als ein Tablet ausgebildet. Die Recheneinheit ist beispielsweise als ein Computersystem vorhanden. Vorteilhafterweise ist die Elektronikeinheit des Getriebemotors dazu ausgelegt, von einem Sensor oder von mehreren Sensoren ermittelte Messwerte, insbesondere von Sensoren des Getriebemotors, der Recheneinheit bereitzustellen. Beispielsweise sind die Elektronikeinheiten der Getriebemotoren, insbesondere jede Elektronikeinheit dazu ausgelegt, von einem Sensor, von mehreren Sensoren und/oder von allen Sensoren ermittelte Messwerte der Recheneinheit bereitzustellen. Bevorzugterweise sind ein Getriebemotor, insbesondere sind alle Getriebemotoren, dazu ausgebildet, der Recheneinheit alle ermittelten Messwerte bereitzustellen.

In einer vorteilhaften Ausführungsform des Systems weist ein Getriebemotor eine Datenschnittstelle auf. Beispielsweise weist eine Elektronikeinheit des Getriebemotors die Datenschnittstelle auf. Hierdurch ist ein Getriebemotor mit einem weiteren Getriebemotor, mit einem Sensor, mit einem Aktor und/oder mit einer Recheneinheit verbindbar.

Die Datenschnittstelle ist beispielsweise als eine Ethernet-Schnittstelle, als eine WLAN-Funkmodul und/oder als ein Bluetooth-Funkmodul ausgebildet. Durch die Datenschnittstelle ist den Getriebemotoren ein Datenaustausch untereinander ermöglicht. Vorteilhafterweise umfasst der Sensor, der Aktor und/oder die Recheneinheit eine Datenschnittstelle.

Die Datenschnittstelle ist vorteilhafterweise als eine Eingangs- und Ausgangsschnittstelle ausgebildet, sodass Daten empfangen und/oder gesendet werden können.

Auch erweist es sich von Vorteil, dass jeder Getriebemotor mittels der Datenschnittstelle mit jedem weiteren Getriebemotor des Systems verbunden ist, sodass ein Datenaustausch zwischen den Getriebemotoren realisiert ist. Beispielsweise kommunizieren die Getriebemotoren über die Datenschnittstellen der Getriebemotoren miteinander. Vorteilhafterweise sind die Elemente des Systems, insbesondere die Getriebemotoren, die Aktoren und/oder die Sensoren des Systems, mittels der Datenschnittstellen der Elemente miteinander verbunden. Beispielsweise sind alle Elemente des Systems über die Datenschnittstellen der Elemente miteinander verbunden.

Eine vorteilhafte Modifikation des Systems ist, dass das System, insbesondere eine Elektronikeinheit eines Getriebemotors, dazu ausgebildet ist, auf Grundlage eines Messwerts eine Funktionsstörung des Systems zu erkennen.

Vorteilhafterweise ist das System, beispielsweise ein Getriebemotor, insbesondere eine Elektronikeinheit eines Getriebemotors, dazu ausgebildet, eine Funktionsstörung des Systems an die Recheneinheit zu melden. Die Recheneinheit, kann als eine vom System unabhängig arbeitende Recheneinheit ausgebildet sein oder als Bestandteil des Systems vorhanden sein. Die Recheneinheit ist beispielsweise als ein Computer, z.B. als ein Computer-Server, Hostrechner oder Hardware-Server vorhanden. Eine Funktionsstörung des Systems kann beispielsweise in Form einer Überhitzung und/oder eines Ausfalls eines Getriebemotors vorliegen. Denkbar ist auch, dass die Funktionsstörung an einem Bauteil, welches im angeordneten Zustand mit einem Getriebemotor verbunden ist, vorliegt und diese Funktionsstörung durch einen Sensor des Systems detektierbar ist. Beispielsweise ist eine Blockierung einer Drehbewegung einer durch das System antreibbaren Welle eine Funktionsstörung des Systems.

Eine vorteilhafte Ausgestaltung der Erfindung ist eine Stallung, ein Gewächshaus, eine Fassade, eine Überdachung, ein Sonnenschutzsystem, ein Hebesystem und/oder ein Lüftungssystem mit einem System nach einer der vorangegangenen Ausführungsformen. Eine bevorzugte Ausgestaltung der Erfindung ist eine Obst- und/oder Gemüseüberdachung mit einem System nach einer der vorangegangenen Ausführungsformen.

### Beschreibung eines Ausführungsbeispiels

Ein Ausführungsbeispiel wird anhand der nachstehenden schematischen Zeichnungen unter Angabe weiterer Einzelheiten und Vorteile näher erläutert:
Es zeigen:
- Figur 1: eine Draufsicht auf einen Getriebemotor,
- Figur 2: in einer schematischen Darstellung ein System umfassend zwei Getriebemotoren und einen Sensor und
- Figur 3: eine schematische, perspektivische Darstellung eines Gebäudes mit einem erfindungsgemäßen System.

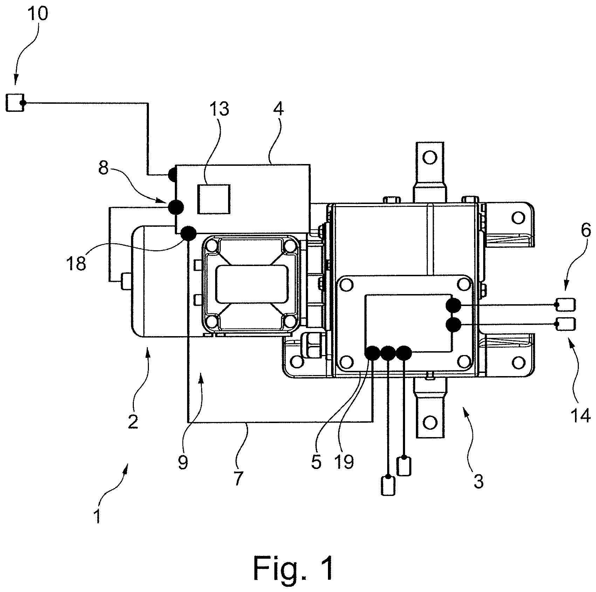

Figur 1 zeigt einen Getriebemotor 1 umfassend einen Elektromotor 2 und ein Getriebe 3. Z.B. ist am Elektromotor 2 eine erste Elektronikeinheit 4 vorhanden und am Getriebe 3 befindet sich beispielsweise eine zweite Elektronikeinheit 5. Zum Beispiel ist die erste Elektronikeinheit 4 an einer Datenschnittstelle 18 mittels eines Datenaustauschmittels 7 mit einer weiteren Datenschnittstelle 19 der zweiten Elektronikeinheit 5 verbunden.

Das Datenaustauschmittel 7 ist beispielsweise in Form eines Datenkabels ausgebildet.

Die erste Elektronikeinheit 4 umfasst beispielsweise eine Sensoreinheit 8, welche beispielsweise einen Temperatursensor aufweist, um z.B. eine Temperatur einer Antriebsseite 9 des Getriebemotors 1, insbesondere des Elektromotors 2 zu detektieren bzw. zu messen. Denkbar ist auch, dass mehrere Temperatursensoren vorhanden sind.

Die zweite Elektronikeinheit 5 umfasst beispielsweise eine Sensoreinheit 6 und z.B. eine weitere Sensoreinheit 14. Denkbar ist auch, dass die zweite Elektronikeinheit 5 mit der weiteren Sensoreinheit 14 koppelbar ist, wobei die weitere Sensoreinheit 14 als eine vom Getriebemotor 1 unabhängige Einheit vorhanden ist. Die Sensoreinheit 14 ist somit beispielsweise nicht Teil des Getriebemotors 1.

Die Sensoreinheit 6 der zweiten Elektronikeinheit 5 umfasst beispielsweise einen Geschwindigkeitssensor, um zum Beispiel eine Rotationsgeschwindigkeit eines drehbeweglichen Elements des Getriebes 3 zu bestimmen. Beispielsweise bestimmt die Sensoreinheit 5 die Geschwindigkeit einer Welle des Getriebes 3, welche mit einer anzutreibenden Komponente, welche nicht Teil des Getriebemotors 1 ist, koppelbar ist.

Der Getriebemotor 1 umfasst weiterhin beispielsweise eine Eingangs- und/oder Ausgangsschnittstelle 10. Die Eingangs- und/oder Ausgangsschnittstelle 10 ist beispielsweise über ein Datenkabel mit einer der Elektronikeinheiten 4, 5 verbunden. In Figur 1 ist die Eingangs- und/oder Ausgangsschnittstelle 10 beispielsweise mit der ersten Elektronikeinheit 4 verbunden. Die Eingangs- und/oder Ausgangsschnittstelle 10 ist beispielsweise als eine physische Schnittstelle, zum Beispiel als eine Steckbuchse vorhanden. Außerdem vorteilhaft ist, dass der Getriebemotor 1 einen Frequenzumwandler 13 aufweist. Durch das Vorhandensein des Frequenzumwandlers 13 ist der Getriebemotor 1 flexibel in unterschiedlichen Stromnetzen zum Beispiel Europa oder USA einsetzbar und/oder regelbar.

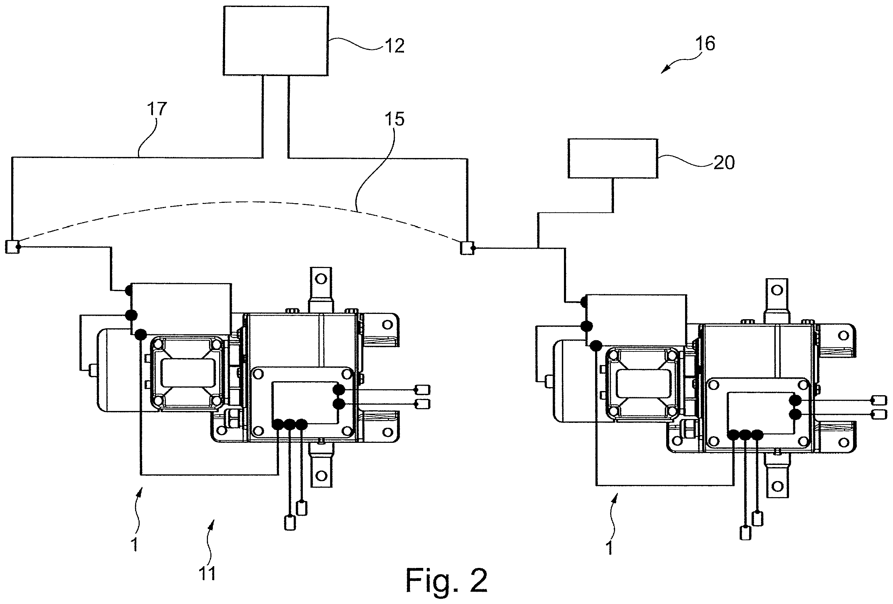

In Figur 2 sind zwei Getriebemotoren 1, ein externer Sensor 12 und beispielsweise ein Aktor 20 abgebildet. Beispielsweise bilden die Getriebemotoren 1 und der Sensor 12 zusammen ein Getriebemotorsystem 11, z.B. in Form eines Antriebssystems 16. Die Getriebemotoren 1 treiben beispielsweise voneinander getrennte Organe, z.B. zwei Wellen, an. Denkbar ist auch, dass die Getriebemotoren 1 ein einziges Organ, z.B. eine Welle, gemeinsam antreiben. Beispielsweise sind zwei Getriebemotoren 1 sich gegenüberliegend an einer Welle vorhanden, wobei beide Getriebemotoren 1 gemeinsam, insbesondere gleichzeitig die Welle antreiben. Vorteilhafterweise sind die Getriebemotoren 1 über ein Datenaustauschmittel 15 (gestrichelt dargestellt) miteinander gekoppelt. Das Datenaustauschmittel 15 ist beispielsweise als eine Funkverbindung vorhanden. Der Sensor 12 ist beispielsweise über ein Datenaustauschmittel 17 z.B. über die Eingangs- und/oder Ausgangsschnittstelle 10 mit einem Getriebemotor 1 oder mit den Getriebemotoren 1 verbunden.

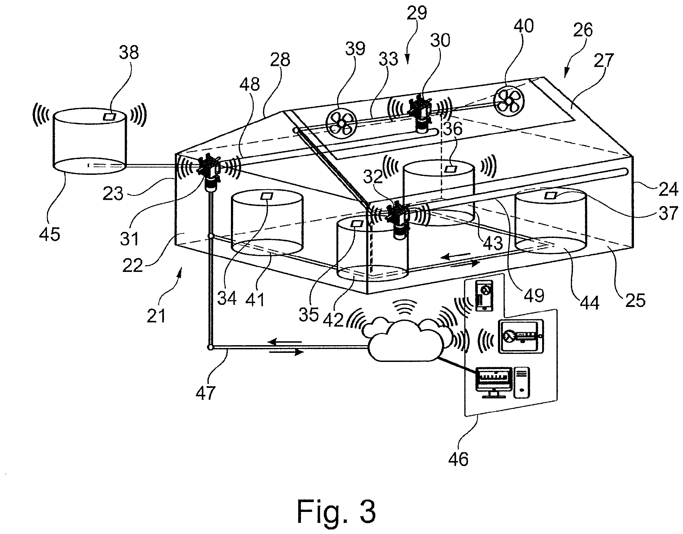

In Figur 3 ist ein Gebäude 21 dargestellt, umfassend Wandbereiche 22 - 25 und ein Dach 26 mit Dachflächenbereichen 27, 28. Das Gebäude 21 ist beispielsweise als eine Stallung und/oder ein Gewächshaus ausgebildet. Das Gebäude 21 umfasst ein Getriebemotorsystem 29 mit Getriebemotoren 30 - 32, welche mittels ihrer Datenschnittstellen über eine Funkverbindung 33 miteinander und mit Sensoren 34 - 38 und Aktoren 39, 40 verbunden sind. Die Sensoren 34 - 38 überwachen beispielsweise abschnittsweise einen Bereich 41 - 44 des Gebäudes 21 und/oder einen Außenbereich 45 des Gebäudes 21. Die Aktoren 39, 40 des Gebäudes 21 sind beispielsweise als Lüftungselemente, z.B. in Form von Lüftern vorhanden, welche z.B. mittels eines Schalters durch zumindest einen der Getriebemotoren 30 - 32 schaltbar vorhanden sind. Zumindest einer der Getriebemotoren 30 - 32 kann außerdem mit einer z.B. extern vorhandenen Recheneinheit 46 verbunden sein. Der zumindest eine Getriebemotor 30 - 32 ist beispielsweise mittels einer Internet-Verbindung 47 mit der Recheneinheit 46 verbunden.

Die Getriebemotoren 31, 32 sind beispielsweise jeweils mit einer Welle 48, 49 gekoppelt. Die Welle 48, 49 treibt beispielsweise ein Wickelsystem an, mittels welchem zumindest ein Teil der Wandbereich 23, 25 geöffnet oder geschlossen werden kann.

**Bezugszeichenliste**

| | | | |
|---|---|---|---|
| 1 | Getriebemotor | 25 | Wandbereich |
| 2 | Elektromotor | 26 | Dach |
| 3 | Getriebe | 27 | Dachflächenbereich |
| 4 | Elektronikeinheit | 28 | Dachflächenbereich |
| 5 | Elektronikeinheit | 29 | Getriebemotorsystem |
| 6 | Sensoreinheit | 30 | Getriebemotor |
| 7 | Datenaustauschmittel | 31 | Getriebemotor |
| 8 | Sensoreinheit | 32 | Getriebemotor |
| 9 | Antriebsseite | 33 | Funkverbindung |
| 10 | Eingangsschnittstelle / Ausgangsschnittstelle | 34 | Sensor |
| | | 35 | Sensor |
| 11 | Getriebemotorsystem | 36 | Sensor |
| 12 | Sensor | 37 | Sensor |
| 13 | Frequenzumrichter | 38 | Sensor |
| 14 | Sensoreinheit | 39 | Aktor |
| 15 | Datenaustauschmittel | 40 | Aktor |
| 16 | Antriebssystem | 41 | Bereich |
| 17 | Datenaustauschmittel | 42 | Bereich |
| 18 | Datenschnittstelle | 43 | Bereich |
| 19 | Datenschnittstelle | 44 | Bereich |
| 20 | Aktor | 45 | Bereich |
| 21 | Gebäude | 46 | Recheneinheit |
| 22 | Wandbereich | 47 | Internet-Verbindung |
| 23 | Wandbereich | 48 | Welle |
| 24 | Wandbereich | 49 | Welle |

## Patentansprüche

1. System (16) mit einer Mehrzahl von Getriebemotoren (1) und wenigstens einem Sensor (12), wobei der Sensor (12) dazu ausgelegt ist, einen Messwert zu erfassen, wobei jeder Getriebemotor (1) jeweils eine Elektronikeinheit (4, 5) umfasst, wobei die Elektronikeinheiten (4, 5) der Getriebemotoren (1) so aufgebaut sind, dass ein Datenaustausch zwischen den Elektronikeinheiten (4, 5) der Getriebemotoren (1) ermöglicht ist, wobei wenigstens ein Getriebemotor (1) mit dem Sensor (12) verbunden ist, **dadurch gekennzeichnet, dass** die Getriebemotoren (1) derart ausgebildet sind, dass der vom Sensor (12) erfasste Messwert allen Elektronikeinheiten (4, 5) der Getriebemotoren (1) zur Verfügung steht, wobei jede einzelne Elektronikeinheit (4, 5) dazu ausgelegt ist, auf Grundlage des durch den Sensor (12) erfassten Messwerts eine Steuerung und/oder Regelung eines Getriebemotors (1) des Systems (16) vorzunehmen.

2. System (16) nach dem vorangegangen Anspruch 1, **dadurch gekennzeichnet, dass** ein Getriebemotor (1) den Sensor (12) umfasst.

3. System (16) nach einem der vorangegangenen Ansprüche, **dadurch gekennzeichnet, dass** der Sensor (12) zusätzlich zu den Getriebemotoren (1) vorhanden ist.

4. System (16) nach einem der vorangegangenen Ansprüche, **dadurch gekennzeichnet, dass** ein Getriebemotor (1) dazu ausgebildet ist, einen Aktor (20) zu schalten.

5. System (16) nach einem der vorangegangenen Ansprüche, **dadurch gekennzeichnet, dass** der Sensor (12) einen Betriebsparameter eines Getriebemotors (1) erfasst.

6. System (16) nach einem der vorangegangenen Ansprüche, **dadurch gekennzeichnet, dass** auf Grundlage einer Auswertung der vom Sensor (12) erfassten Messwerte ein erster Getriebemotor (1) einen weiteren Getriebemotor (1) des Systems (16) steuert und/oder regelt.

7. System (16) nach einem der vorangegangenen Ansprüche, **dadurch gekennzeichnet, dass** mehrere Sensoren vorhanden sind, wobei jeweils ein Getriebemotor (1) auf Basis eines von einem der Sensoren (12) ermittelten Messwerts einen weiteren Getriebemotor (1) des Systems (16) steuert und/oder regelt.

8. System (16) nach einem der vorangegangenen Ansprüche, **dadurch gekennzeichnet, dass** zumindest ein Getriebemotor (1) dazu ausgelegt ist, den vom Sensor (12) ermittelten Messwert einer Recheneinheit (46) bereitzustellen.

9. System (16) nach einem der vorangegangenen Ansprüche, **dadurch gekennzeichnet, dass** ein Getriebemotor (1) eine Datenschnittstelle (10, 18, 19) aufweist.

10. System (16) nach einem der vorangegangenen Ansprüche,
**dadurch gekennzeichnet, dass** jeder Getriebemotor (1) mittels der Datenschnittstelle (10, 18, 19) mit jedem weiteren Getriebemotor (1) des Systems (16) verbunden ist, sodass ein Datenaustausch zwischen den Getriebemotoren (1) realisiert ist.

11. System (16) nach einem der vorangegangenen Ansprüche,
**dadurch gekennzeichnet, dass** das System (16) dazu ausgebildet ist, auf Grundlage eines Messwerts eine Funktionsstörung des Systems (16) zu erkennen.

12. Stallung (21), Gewächshaus, Fassade, Überdachung, Sonnenschutzsystem und/oder Lüftungssystem mit einem System (16) nach einem der vorangegangenen Ansprüche.

## Claims

1. System (16) comprising a plurality of gear motors (1) and at least one sensor (12), wherein the sensor (12) is designed to record a measured value, wherein each gear motor (1) comprises a respective electronic unit (4, 5), wherein the electronic units (4, 5) of the gear motors (1) are constructed so as to enable a data exchange between the electronic units (4, 5) of the gear motors (1), wherein at least one gear motor (1) is connected to the sensor (12), **characterized in that** the gear motors (1) are designed such that the measured value recorded by the sensor (12) is available to all electronic units (4, 5) of the gear motors (1), wherein each individual electronic unit (4, 5) is designed to control and/or regulate a gear motor (1) of the system (16) on the basis of the measured value recorded by the sensor (12).

2. System (16) according to preceding Claim 1, **characterized in that** a gear motor (1) comprises the sensor (12).

3. System (16) according to either of the preceding claims, **characterized in that** the sensor (12) is present in addition to the gear motors (1).

4. System (16) according to one of the preceding claims, **characterized in that** a gear motor (1) is designed to switch an actuator (20).

5. System (16) according to one of the preceding claims, **characterized in that** the sensor (12) records an operating parameter of a gear motor (1).

6. System (16) according to one of the preceding claims, **characterized in that** a first gear motor (1) controls and/or regulates a further gear motor (1) of the system (16) on the basis of an evaluation of the measured values recorded by the sensor (12).

7. System (16) according to one of the preceding claims, **characterized in that** multiple sensors are present, wherein a respective gear motor (1) controls and/or regulates a further gear motor (1) of the system (16) on the basis of a measured value determined by one of the sensors (12).

8. System (16) according to one of the preceding claims, **characterized in that** at least one gear motor (1) is designed to provide the measured value determined by the sensor (12) to a computing unit (46).

9. System (16) according to one of the preceding claims, **characterized in that** a gear motor (1) has a data interface (10, 18, 19).

10. System (16) according to one of the preceding claims, **characterized in that** each gear motor (1) is connected to each further gear motor (1) of the system (16) by way of the data interface (10, 18, 19), so as to implement a data exchange between the gear motors (1).

11. System (16) according to one of the preceding claims, **characterized in that** the system (16) is designed to recognize a functional fault with the system (16) on the basis of a measured value.

12. Stables (21), greenhouse, facade, canopy, sun protection system and/or ventilation system comprising a system (16) according to one of the preceding claims.

## Revendications

1. Système (16) comprenant une pluralité de motoréducteurs (1) et a moins un capteur (12), le capteur (12) étant conçu pour acquérir une valeur mesurée, chaque motoréducteur (1) comportant respectivement une unité électronique (4, 5), les unités électroniques (4, 5) des motoréducteurs (1) étant constituées de telle sorte qu'un échange de données entre les unités électroniques (4, 5) des motoréducteurs (1) est rendu possible, au moins un motoréducteur (1) étant relié au capteur (12), **caractérisé en ce que** les motoréducteurs (1) sont configurés de telle sorte que la valeur mesurée acquise par le capteur (12) est à la disposition de toutes les unités électroniques (4, 5) des motoréducteurs (1), chaque unité électronique (4, 5) individuelle étant conçue pour effectuer une commande et/ou une régulation d'un motoréducteur (1) du système (16) sur la base de la valeur mesurée acquise par le capteur.

2. Système (16) selon la revendication 1 précédente, **caractérisé en ce qu'**un motoréducteur (1) comprend le capteur (12).

3. Système (16) selon l'une des revendications précédentes, **caractérisé en ce que** le capteur (12) est en plus présent dans les motoréducteurs (1).

4. Système (16) selon l'une des revendications précédentes, **caractérisé en ce qu'**un motoréducteur (1) est configuré pour commuter un actionneur (20).

5. Système (16) selon l'une des revendications précédentes, **caractérisé en ce que** le capteur (12) acquiert un paramètre de fonctionnement d'un motoréducteur (1).

6. Système (16) selon l'une des revendications précédentes, **caractérisé en ce qu'**un premier motoréducteur (1) commande et/ou régule un motoréducteur (1) supplémentaire du système (16) sur la base d'une interprétation des valeurs mesurées acquises par le capteur (12).

7. Système (16) selon l'une des revendications précédentes, **caractérisé en ce que** plusieurs capteurs sont présents, un motoréducteur (1) commandant et/ou régulant respectivement un motoréducteur (1) supplémentaire du système (16) sur la base d'une valeur mesurée déterminée par l'un des capteurs (12).

8. Système (16) selon l'une des revendications précédentes, **caractérisé en ce qu'**au moins un motoréducteur (1) est conçu pour fourni à une unité de calcul (46) la valeur mesurée déterminée par le capteur (12) .

9. Système (16) selon l'une des revendications précédentes, **caractérisé en ce qu'**un motoréducteur (1) possède une interface de données (10, 18, 19).

10. Système (16) selon l'une des revendications précédentes, **caractérisé en ce que** chaque motoréducteur (1) est relié à chaque motoréducteur (1) supplémentaire du système (16) au moyen de l'interface de données (10, 18, 19), de sorte qu'un échange de données entre les motoréducteurs (1) est réalisé.

11. Système (16) selon l'une des revendications précédentes, **caractérisé en ce que** le système (16) est configuré pour reconnaître un défaut de fonctionnement du système (16) sur la base d'une valeur mesurée.

12. Écurie (21), serre, façade, couverture, système de protection contre le soleil et/ou système de ventilation comprenant un système (16) selon l'une des revendications précédentes.
